# EUROPÄISCHE PATENTSCHRIFT

(11) **EP 0 732 262 B1**
(45) Veröffentlichungstag und Bekanntmachung des Hinweises auf die Patenterteilung: **17.11.2004**
(21) Anmeldenummer: 96101397.6
(22) Anmeldetag: 01.02.1996
(51) Int. Cl.: B64C 1/00, B64C 3/20

(54) **Flugzeugtragelement**
Structural component for aircraft
Elément structurel pour avion

(30) Priorität: 15.03.1995 DE 19509340
(43) Veröffentlichungstag der Anmeldung: 18.09.1996
(73) Patentinhaber: Airbus Deutschland GmbH, 21129 Hamburg (DE)
(72) Erfinder: Gillandt, Siegfried, Dipl.-Ing., D-28844 Weyhe (DE); Kröber, Ingo, Dipl.-Ing., D-28279 Bremen (DE)
(74) Vertreter: Hansmann, Dierk, Dipl.-Ing.

(56) Entgegenhaltungen:
- DE-A- 2 907 685
- DE-C- 418 854

## Beschreibung

Die Erfindung betrifft ein Flugzeugtragelement in Form eines als Hohlprofil ausgebildeten Biegeträgers mit einem Zuggurt sowie einem Druckgurt, bei dem Teilbereiche aus wenigstens einem metallischen Werkstoff und andere Teilbereiche aus einem nichtmetallischen Werkstoff bestehen und wobei der Druckgurt aus metallischem Werkstoff besteht.

Derartige als Strukturelemente ausgebildete Flugzeugtragelemente stellen beispielsweise die Tragflächen und Leitwerke von Flugzeugen dar. Mit Hilfe dieser Bauelemente werden die zum Fliegen erforderlichen Auf- und Abtriebskräfte erzeugt. Der Querschnitt dieser Bauelemente wird dazu benutzt, die Auftriebskräfte und Abtriebskräfte zum Rumpf des Flugzeuges zu übertragen, wobei sowohl eine Kraftübertragung als auch eine Übertragung von Momenten erfolgt. Bekannt ist es, die betreffenden Bauelemente, die in der Regel eine in lotrechter Richtung oben angeordnete Oberschale und eine in lotrechter Richtung unten angeordnete Unterschale aufweisen, entweder aus metallischen Werkstoffen oder aus Faserverbundwerkstoffen aufzubauen. Beide Materialarten haben spezielle Eigenschaften, die bei einem Einsatz im Flugzeug sowohl Vorteile als auch Nachteile bedingen. Daneben ist aus der DE - C - 418 854 ein Flugzeugtragelement der eingangs genannten Art bekannt geworden, bei dem die Unterseite einer aus einem in sich steifen Metallhohlkörper bestehenden Tragfläche durch Stoff, Drahtgewebe oder dergleichen abgedeckt ist.

Weiterhin ist aus der DE - A - 26 57 832 ein Flugzeugtragelement in Leichtbauweise bekannt geworden, bei dem die Zug- und Druckkräfte durch Elemente aus Faserverbundwerkstoffen getragen werden, bei dem aber die Krafteinleitung durch metallene Bauteile erfolgt. Schließlich ist aus der DE - A - 27 21 651 ein Strukturelement zur Krafteinleitung eines Tragflügelhauptanschlusses bekannt geworden, bei dem Zugschlaufenpakete aus Fasern in eine kunftstoffbeschichtete Metallkausche eingebettet sind und bei dem darüber hinaus ein Druckkern aus Faserverbundwerkstoff vorgesehen ist. Im Grundsatz verbessern in beiden vorgenannten Fällen Bauelemente aus metallenen Werkstoffen die Einleitung von Druckkräften in eine Faserverbundstruktur, die ihrerseits sowohl Zug- als auch Druckkräfte überträgt.

Aufgabe der vorliegenden Erfindung ist es, ein Flugzeugtragelement der einleitend genannten Art derart zu konstruieren, daß eine gewichtssparende und kostengünstige Konstruktion durch optimale Ausnutzung der jeweiligen Werkstoffeigenschaften ermöglicht wird. Diese Aufgabe wird erfindungsgemäß dadurch gelöst, daß der aus nichtmetallischem Werkstoff bestehende Teilbereich als Zuggurt ausgebildet ist und aus einem Faserverbundwerkstoff besteht.

Die Erfindung macht sich dabei die an sich bekannte Tatsache zu Nutze, daß sich die üblicherweise in der Leichtbautechnik, insbesondere im Bereich von Flugzeugkonstruktionen, verwendeten Werkstoffe bezüglich ihrer Eigenschaften bei der Übertragung von Zug- und Druckkräften nachhaltig unterscheiden. Bei einem Flugzeugflügel werden die im Bereich der Unterseite angeordneten Werkstoffe aufgrund der Flügelbelastungen im Flug überwiegend auf Zug beansprucht und stellen, sofern man den Tragflügel als einen Biegeträger mit Hohlprofil ansieht, gleichsam den Zuggurt dar. Demgegenüber werden die im Bereich der Flügeloberseite eingesetzten Werkstoffe im Flug überwiegend druckbeaufschlagt und bilden in diesem Bild gleichsam den Druckgurt des Hohlträgers. Bei dem Flugzeugtragelement nach der Erfindung ist für jeden dieser unterschiedlich beanspruchten Teilbereiche ein an die herrschenden Belastungen optimal angepaßter Werkstoff vorgesehen. Es wird somit die konventionelle Konstruktionsweise verlassen, bei der für ein gesamtes Strukturelement, beispielsweise das gesamte Flugzeugtragelement, sowohl im Bereich der Oberschale als auch im Bereich der Unterschale Metall- oder Faserverbundwerkstoffe verwendet werden.

Eine konstruktiv leichte Ausführungsform des erfindungsgemäßen Flugzeugtragelement wird dadurch erreicht, daß der metallische Werkstoff aus einer Äluminiumlegierung besteht. Andererseits können besonders hohe Festigkeitsanforderungen dadurch erfüllt werden, daß der metallische Werkstoff aus einer Titanlegierung besteht.

Für spezielle Anwendungsfälle ist es im Rahmen der Erfindung weiterhin möglich, als metallischen Werkstoff eine Stahllegierung vorzusehen.

Eine besonders gewichtsgünstige Konstruktion für die Erfüllung der geforderten Lebensdauer der zugabeanspruchten Teilbereiche des erfindungsgemäßen Flugzeugtragelement wird dadurch erzielt, daß der Faserverbundwerkstoff aus kohlenstofffaserverstärktem Kunststoff besteht.

Ein Hauptanwendungsgebiet des Flugzeugtragelement nach der Erfindung wird dadurch erschlossen, daß dieses den Tragflügel eines Flugzeuges bildet. In gleicher Weise ist es möglich, daß ein derartiges Element als Höhenleitwerk eines Flugzeuges Verwendung findet. zwar ist es in Zusammenhang mit derartigen Elementen aus der DE - A - 29 07 685 an sich bereits bekannt, die vorangehend aufgeführten Werkstoffe als Außenhäute von Flugzeugtragflächen zu verwenden, jedoch sind im Fall dieser bekannten Anordnungen die Abdeckungen nicht, wie bei dem erfindungsgemäßen Flugzeugtragelement, als an die jeweiligen Beanspruchungsbedingungen angepaßte Elemente zur Kraftübertragung ausgebildet.

In der Zeichnung ist ein Ausführungsbeispiele der Erfindung schematisch dargestellt. Es zeigen:
- Fig. 1: eine Vorderansicht eines Flugzeuges mit eingezeichneten Kraftbelastungen im Bereich einer der Tragflächen und im Bereich des Höhenleitwerkes,
- Fig. 2: einen schematischen Querschnitt durch einen Teil eines Strukturelementes als Tragflügel und
- Fig. 3: einen Querschnitt wie Fig. 2 als Höhenleitwerk.

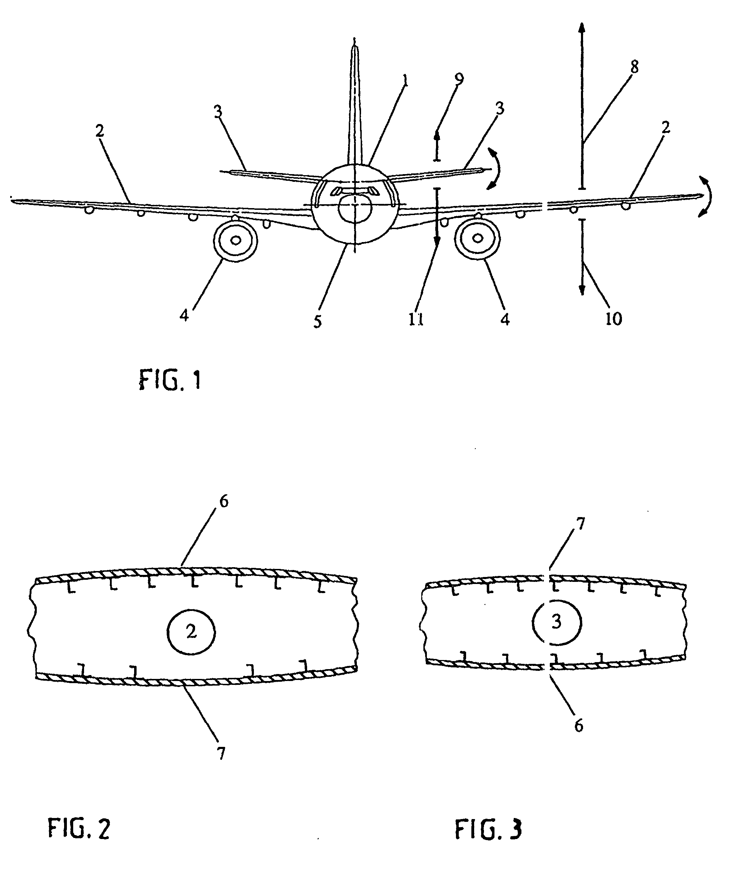

Gemäß Fig. 1 ist ein Flugzeug 1 mit einem aus Tragflächen 2 bestehenden Tragflügel, einem Höhenleitwerk 3 sowie Triebwerken 4 ausgestattet. Das Höhenleitwerk 3 und die Tragflächen 2 sind jeweils über einen Rumpf 5 verbunden. In Fig. 2 ist am Beispiel einer der Tragflächen 2 dargestellt, daß sowohl das Höhenleitwerk 3 als auch die Tragflächen 2 jeweils kraftübertragende Strukturelemente bilden, die aus je einer Oberschale 6 und einer Unterschale 7 bestehen.

Im Bereich der Tragflächen 2 und des Höhenleitwerkes 3 in Fig. 1 sind jeweils Auftriebskräfte 8,9 und Abtriebskräfte 10,11 eingezeichnet, die aus der jeweiligen Strömungsbelastung dieser Bauelemente im Flug resultieren. Im Bereich der Tragflächen 2 ist erkennbar, daß die Auftriebskräfte 8 größer als die Abtriebskräfte 10 sind. Im Bereich des Höhenleitwerkes 3 sind die Abtriebskräfte 11 größer als die Auftriebskräfte 9. Im Bereich der Tragflächen 2 hat dies zur Folge, daß deren Oberschale 6 überwiegend mit Drucklasten beaufschlagt wird, die Unterschale 7 jedoch überwiegend mit Zuglasten. Im Bereich des Höhenleitwerkes 3 liegen umgekehrte Verhältnisse vor.

Diejenige der Schalen 6,7 der Tragflächen 2 sowie des Höhenleitwerks 3, die überwiegend mit Zugkräften belastet wird, wird jeweils aus einem Werkstoff in Faserverbundbauweise ausgebildet. Andererseits wird diejenige Schale, die überwiegend druckbelastet wird, aus einem metallischen Werkstoff gefertigt. Für den Bereich der Tragflächen 2 bedeutet dies, daß die Oberschale 6 aus einer vorzugsweise hochfesten Metallegierung besteht und die Unterschale 7 aus Faserverbundwerkstoff, während im Fall des Höhenleitwerks 3 die Oberschale aus Faserverbundwerkstoff und die Unterschale aus einem Metall besteht. Als metallische Werkstoff können beispielsweise Aluminiumlegierungen, Titanlegierungen oder auch Stahllegierungen verwendet werden. Als faserverstärkte Werkstoffe kommen vorzugsweise kohlenstoffaserverstärkte Kunststoffe (CFK) in Frage, aber auch Bor-, Glas- oder Synthesefasern mit unterschiedlichen Trägermaterialien.

Durch eine solchermaßen angepaßte Materialauswahl an die jeweils überwiegend vorliegenden Belastungsarten ist es möglich, derartige Strukturelemente optimal zu dimensionieren und damit eine erhebliche Gewichtsreduzierung und Kostenersparnis zu erzielen. Darüber hinaus läßt sich auf diese Weise eine verbesserte Toleranz dieser Bauteile gegenüber der Existenz von Kerben bei häufig wiederkehrenden Belastungen erreichen, die sowohl herstellungsbedingt als auch betriebsbedingt sein können.

In Abhängigkeit vom Einsatzzweck des jeweiligen Bauteils ist dabei zu analysieren, ob überwiegend Druckkräfte oder überwiegend Zugkräfte auftreten, und in Abhängigkeit von diesem Ergebnis wird für das betreffende Bauteil die geeignete Materialkombination aus metallischen Werstoffen und faserverstärkten Werkstoffen festgelegt.

## Patentansprüche

1. Flugzeugtragelement in Form eines als Hohlprofil ausgebildeten Biegeträgers, mit einem Zuggurt (7) sowie einem Druckgurt (6), bei dem Teilbereiche aus wenigstens einem metallischen Werkstoff und andere Teilbereiche aus einem nichtmetallischen Werkstoff bestehen und wobei der Druckgurt (6) aus metallischem Werkstoff besteht, **dadurch gekennzeichnet, daß** der aus nichtmetallischem Werkstoff bestehende Teilbereich als Zuggurt (7) ausgebildet ist und aus einem Faserverbundwerkstoff besteht.

2. Flugzeugtragelement nach Anspruch 1 mit einer in lotrechter Richtung oben angeordneten Oberschale und einer in lotrechter Richtung unten angeordneten Unterschale, wobei eine der Schalen als Zuggurt und die andere als Druckgurt ausgebildet ist, **dadurch gekennzeichnet, daß** die als Druckgurt ausgebildete Schale (6) aus metallischem Werkstoff und die als Zuggurt ausgebildete Schale (7) aus Faserverbundwerkstoff besteht.

3. Flugzeugtragelement nach Anspruch 2, **dadurch gekennzeichnet, daß** die Schalen (6, 7) einen Tragflügel (2) eines Flugzeuges (1) bilden.

4. Flugzeugtragelement nach Anspruch 2, **dadurch gekennzeichnet, daß** die Schalen ein Höhenleitwerk (3) eines Flugzeuges (1) bilden.

5. Flugzeugtragelement nach einem der Ansprüche 1 bis 4, **dadurch gekennzeichnet, daß** der metallische Werkstoff aus einer Aluminiumlegierung besteht.

6. Flugzeugtragelement nach einem der Ansprüche 1 bis 4, **dadurch gekennzeichnet, daß** der metallische Werkstoff aus einer Titanlegierung besteht.

7. Flugzeugtragelement nach einem der Ansprüche 1 bis 4, **dadurch gekennzeichnet, daß** der metallische Werkstoff aus einer Stahllegierung besteht.

8. Flugzeugtragelement nach einem der Ansprüche 1 bis 7, **dadurch gekennzeichnet, daß** der Faserverbundwerkstoff aus kohlenstoffaserverstärktem Kunststoff besteht.

9. Flugzeugtragelement nach einem der Ansprüche 1 bis 7, **dadurch gekennzeichnet, daß** der Faserverbundwerkstoff aus bor-, glas- oder synthesefaserverstärktem Kunststoff besteht.

## Claims

1. An aircraft lifting element in the form of a bending beam designed as a hollow section, with a tension chord (7) and also with a compression chord (6), wherein subregions consist of at least one metallic material and other subregions consist of a non-metallic material and wherein the compression chord (6) consists of metallic material, **characterised in that** the subregion consisting of non-metallic material is designed as a tension chord (7) and consists of a fibrous composite material.

2. Aircraft lifting element according to Claim 1, with an upper shell arranged at the top in the vertical direction and with a lower shell arranged at the bottom in the vertical direction, one of the shells taking the form of a tension chord and the other taking the form of a compression chord, **characterised in that** the shell (6) taking the form of a compression chord consists of metallic material and the shell (7) taking the form of a tension chord consists of fibrous composite material.

3. Aircraft lifting element according to Claim 2, **characterised in that** the shells (6, 7) form a wing (2) of an aircraft (1).

4. Aircraft lifting element according to Claim 2, **characterised in that** the shells form an elevator unit (3) of an aircraft (1).

5. Aircraft lifting element according to one of Claims 1 to 4, **characterised in that** the metallic material consists of an aluminium alloy.

6. Aircraft lifting element according to one of Claims 1 to 4, **characterised in that** the metallic material consists of a titanium alloy.

7. Aircraft lifting element according to one of Claims 1 to 4, **characterised in that** the metallic material consists of a steel alloy.

8. Aircraft lifting element according to one of Claims 1 to 7, **characterised in that** the fibrous composite material consists of carbon-fibre-reinforced plastic.

9. Aircraft lifting element according to one of Claims 1 to 7, **characterised in that** the fibrous composite material consists of boron-fibre-reinforced, glass-fibre-reinforced or synthetic-fibre-reinforced plastic.

## Revendications

1. Elément de voilure d'avion de type poutre sollicitée en flexion réalisée sous la forme d'un profilé creux, avec une membrure tendue (7) et une membrure comprimée (6), dans lequel des zones partielles sont formées d'au moins un matériau métallique et d'autres zones partielles sont formées d'un matériau non métallique, la membrure comprimée (6) étant constituée d'un matériau métallique, **caractérisé par le fait que** la zone partielle en matériau non métallique est conformée en membrure tendue (7) et est constituée d'un matériau composite renforcé par fibres.

2. Elément de voilure d'avion selon la revendication 1, comportant une coque supérieure disposée sur le dessus vu dans la direction verticale et une coque inférieure disposée sur le dessous vu dans la direction verticale, l'une des coques étant conformée en membrure tendue et l'autre en membrure comprimée, **caractérisé par le fait que** la coque (6) conformée en membrure comprimée est constituée d'un matériau métallique et la coque (7) conformée en membrure tendue est constituée d'un matériau non métallique.

3. Elément de voilure d'avion selon la revendication 2, **caractérisé par le fait que** les coques (6, 7) forment une aile portante (2) d'un avion (1).

4. Elément de voilure d'avion selon la revendication 2, **caractérisé par le fait que** les coques forment l'empennage de profondeur (3) d'un avion (1).

5. Elément de voilure d'avion selon une des revendications 1 à 4, **caractérisé par le fait que** le matériau métallique est un alliage d'aluminium.

6. Elément de voilure d'avion selon une des revendications 1 à 4, **caractérisé par le fait que** le matériau métallique est un alliage de titane.

7. Elément de voilure d'avion selon une des revendications 1 à 4, **caractérisé par le fait que** le matériau métallique est un alliage d'acier.

8. Elément de voilure d'avion selon une des revendications 1 à 7, **caractérisé par le fait que** le matériau composite renforcé par fibres est une matière plastique renforcée par fibres de carbone.

9. Elément de voilure d'avion selon une des revendications 1 à 7, **caractérisé par le fait que** le matériau composite renforcé par fibres est une matière plastique renforcée par fibres de bore, fibres de verre, fibres synthétiques.
